# EUROPEAN PATENT APPLICATION

(11) **EP 4 393 889 A1**
(43) Date of publication of application: **03.07.2024**
(21) Application number: 22938125.6
(22) Date of filing: 06.07.2022
(51) Int. Cl.: C02F 3/12, C02F 3/28, C02F 3/30, C02F 101/10, C02F 101/16

(54) **BFM-BASED EFFICIENT WASTEWATER TREATMENT METHOD AND SYSTEM USING AOA COUPLED WITH ANAEROBIC AMMONIA OXIDATION**

(30) Priority: 19.04.2022 CN 202210411137
(71) Applicant: Qingdao Spring Water Treatment Co. Ltd., Qingdao, Shandong 266599 (CN)
(72) Inventor: ZHOU, Jiazhong, Qingdao, Shandong 266599 (CN); WU, Di, Qingdao, Shandong 266599 (CN); LI, Jun, Qingdao, Shandong 266599 (CN); GAO, Weinan, Qingdao, Shandong 266599 (CN); HAN, Wenjie, Qingdao, Shandong 266599 (CN); DU, Qiangqiang, Qingdao, Shandong 266599 (CN); SHENG, Deyang, Qingdao, Shandong 266599 (CN); JI, Genghao, Qingdao, Shandong 266599 (CN); ZHOU, Haoran, Qingdao, Shandong 266599 (CN)
(74) Representative: JD&P Patent Attorneys Joanna Dargiewicz & Partners
(86) International application number: PCT/CN2022/104129
(87) International publication number: WO 2023/201900

(57) **Abstract**

The present disclosure discloses an efficient AOA coupled anammox sewage treatment method and system based on BFM form, relating to the field of sewage treatment technology. The method includes: the sewage to be treated enters the anaerobic zone and then enters the carbon migration zone; the supernatant obtained in the carbon migration zone enters the aerobic pure film MBBR zone, the sludge obtained is discharged from the bottom of the carbon migration zone, and then transported to the selection zone through a pipeline connected to a sludge bypass pump. The effluent from the aerobic pure film MBBR zone enters the selection zone, anoxic IFAS zone, and secondary sedimentation zone in sequence. The method of the present disclosure achieves the operation status of pure film MBBR in the aerobic zone by setting the carbon migration zone, avoiding the problem of carbon loss of activated sludge in the aerobic zone. In addition, adding suspended carriers to collect anammox bacteria in the anoxic IFAS zone can reduce the dependence of denitrification on the carbon source of the raw water, and achieve high standard discharge of effluent nitrogen. The system HRT is reduced by more than 40% compared to the traditional activated sludge method, and the minimum HRT is less than 10 hours.

## Description

### TECHNICAL FIELD

The present disclosure relates to the field of sewage treatment technology, in particular to an efficient AOA coupled anammox sewage treatment method and system based on BFM form.

### BACKGROUND

With the proposal of the "3050" dual-carbon target in China, the demand for energy conservation and consumption reduction in sewage treatment is constantly increasing. On one hand, the AOA process utilizes a lower aerobic/anoxic tank volume ratio and reduces the consumption of internal carbon sources in the aerobic tank through a shorter aerobic retention time, on the other hand, it also ensures sufficient denitrification tank volume. When dealing with low influent C/N, the anoxic tank utilizes PHA synthesized during the anaerobic stage to ensure high denitrification efficiency through internal denitrification effect, and ensure high biological phosphorus removal rate through denitrification phosphorus removal, thereby reducing the demand for external carbon sources for sewage nitrogen removal and achieving energy conservation and consumption reduction in sewage treatment. The anammox process achieves autotrophic nitrogen removal of sewage by enriching autotrophic anammox bacteria. For the treatment of ammonia nitrogen type sewage, this process is often combined with shortcut nitrification process. Compared with traditional nitrification and denitrification processes, it has the advantages of saving 60% of aeration, no need to add organic carbon sources, reducing 90% of sludge production, and relatively less nitrogen oxide release. In addition, the anammox process has advantages in high denitrification load, low operating costs and small space occupation, which have been recognized as one of the most economical biological nitrogen removal processes at present. As two efficient and low consumption denitrification processes, coupling AOA with anammox can further reduce the dependence of sewage denitrification on the carbon source of raw water, achieving energy conservation and consumption reduction in sewage treatment.

The main research reports on the coupling of AOA process and anammox technology in existing technologies are shown as below:
Application No. 201910358952.3 discloses a method and device for the treatment of urban sewage by AOA process with endogenous shortcut denitrification coupled with anammox in an anaerobic zone. The device is an AOA process flow that uses activated sludge as the main body for internal carbon source synthesis and nitrification, by adding fillers in the anoxic zone, the nitrite generated in the aerobic zone is utilized to undergo anammox reaction with the remaining ammonia nitrogen in the raw water, the generated nitrate nitrogen can be further removed in the anoxic zone through endogenous denitrification of sludge. Application No. 201910358964.6 discloses a method and device for treating urban sewage using a full process anammox enhanced denitrification AOA process, and the device adds biofilm fillers to the AOA reactor. During the sewage treatment process, carbon sources are accumulated in the anaerobic zone to remove organic matter from the raw water, then entering into the aerobic zone for nitrification reaction, and the generated nitrate nitrogen enters the anoxic zone for endogenous denitrification. The anammox fillers in the AOA reactor utilizes the nitrite nitrogen generated during the nitrification and denitrification process to undergo anammox reaction with the remaining ammonia nitrogen in the raw water, enhancing denitrification. Application No. 201910762403.2 discloses a semi-shortcut coupled anammox device and method for continuous flow AOA biofilm using hydroxylamine, which inhibits NOB activity by adding hydroxylamine reagent to the aerobic tank of the reactor, resulting in a semi-shortcut nitrification reaction in the continuous flow aerobic tank, then, the mixed liquid containing ammonia nitrogen and nitrite nitrogen enters the anoxic tank of the continuous flow AOA biofilm reactor, and anammox bacteria growing on biofilms undergo anammox reactions using ammonia nitrogen and nitrite nitrogen. Application No. 202110336253.6 discloses an AOA coupled anammox deep nitrogen and phosphorus removal process, which includes an anaerobic zone for internal carbon source storage and phosphate release, an aerobic zone for aerobic excessive phosphorus uptake and shortcut nitrification-anammox, and an anoxic zone for internal carbon source shortcut denitrification-anammox. Both the aerobic zone and the anoxic zone are added with active biological fillers to enrich the main functional bacteria. Application No. 202110532485.9 discloses a low oxygen aeration AOA-SBBR shortcut nitrification anammox coupled denitrification phosphorus removal integrated urban sewage treatment method. During the anaerobic stage, denitrifying phosphate accumulating organisms and denitrifying glycogen-accumulating organisms in the sludge store easily degradable organic matter in the water as an internal carbon source, and then achieve shortcut nitrification effect through ammonia oxidizing bacteria in the aerobic aeration stage, and anammox bacteria are used to convert the generated nitrite and ammonia nitrogen into N₂ under micro anoxic environmental conditions inside the fillers for denitrification. Finally, in the anoxic stage, denitrifying phosphate accumulating organisms and denitrifying glycogen-accumulating organisms are used to remove the remaining nitrate nitrogen and phosphorus in the sewage through endogenous denitrification.

Although the existing technologies mentioned above have achieved the coupling of AOA process and anammox, they have not been optimized for the optimal treatment effect of the two processes. Firstly, the activated sludge in the system will undergo an aerobic zone aeration process, leading to aerobic decomposition of its stored internal carbon source, reducing the utilization rate of raw water carbon source in the AOA process. Secondly, the activated sludge travelling throughout the system in each functional zone is coexisting with anammox biofilm in the anammox functional zone. The chaotic composition of the microbial community in the activated sludge will affect the species composition of the anammox biofilm. On the one hand, it cannot achieve efficient enrichment of anammox bacteria, and on the other hand, it is easy to cause the degradation of the existing anammox bacterial community. Therefore, coupling AOA with anammox process in this way cannot achieve a combined or even higher treatment effect between the two processes. Further research is needed to optimize the coupling process flow.

The application No. 201610164752.0 discloses an efficient sewage treatment method for nitrogen and phosphorus removal. The mixed liquid after anaerobic tank treatment is solid-liquid separated, the supernatant is introduced into the phosphorus removal tank and nitrification tank, and the sludge is introduced into the denitrification tank for endogenous denitrification. The phosphorus removal tank and nitrification tank are separated separately, so that phosphorus removal and nitrogen removal do not affect each other. The disclosure achieves nitrification and denitrification through different biological phases by adding sludge-water separation after anaerobic zone, fundamentally avoiding the internal carbon source loss of activated sludge in aerobic zone. However, the minimum total HRT of system in this patent is also above 18 hours, indicating that it does not truly improve the treatment efficiency of the system. In terms of process composition, there are also the following issues. Firstly, the ordinary AOA process still relies on traditional nitrification and denitrification technology, and the nitrogen removal effect is still greatly affected by the C/N of the raw water. On the basis of the extreme lack of influent carbon source, there is still a risk of exceeding the TN standard in the effluent. Secondly, when the settlement effect of the solid-liquid separation tank is poor, on the one hand, the high SS of the effluent supernatant will affect the nitrification effect of the subsequent nitrification tank, leading to a deterioration of the nitrification effect of the nitrification tank. Moreover, the high sludge bypass ratio also increases the ammonia nitrogen load of the aerobic tank influent. Therefore, it is necessary to adjust the reflux ratio between the aerobic tank and the anoxic tank to meet the nitrification effect. Furthermore, the nitrification effect is ensured by the nitrification and aerobic tanks together. If the process forms used in the aerobic tank and the nitrification tank are different, their nitrification effect will inevitably differ. When the sludge bypass ratio of the solid-liquid separation tank is relatively high, the main nitrification body of the system is the aerobic tank using the activated sludge method, and too low nitrification load will cause too larger designed tank volume of the aerobic tank. Finally, the process of phosphorus removal relies on the combination of chemical phosphorus removal, denitrification phosphorus removal, and biological phosphorus removal. When the sludge bypass ratio is relatively high, it will lead to the actual process of anaerobic -anoxic - oxic (AAO) for most of the sewage treatment in the system. At this time, the carbon source utilization rate of the raw water in system will be greatly reduced, which will affect the nitrogen and phosphorus removal effect.

In practical applications, firstly, the traditional AOA process uses activated sludge method, which cannot guarantee the nitrification effect under the impact of influent water. Secondly, adding fillers in the aerobic zone still cannot avoid the aerobic decomposition of the internal carbon source, thus it cannot ensure the endogenous denitrification effect in the anoxic zone. Thirdly, sludge-water separation, set after anaerobic, can avoid aerobic decomposition of internal carbon sources, but the design requirements for the process flow are higher and more rigorous. Moreover, a fixed aerobic tank volume cannot fundamentally resist the impact of water inflow, nor can it further reduce the land occupation of process. Fourthly, the traditional AOA process still relies on traditional nitrification and denitrification to achieve nitrogen removal, despite the extreme lack of influent carbon source, there is still a risk of effluent TN exceeding the standard. In summary, it is necessary to improve the existing process in order to fully exert the advantages of AOA technology

### SUMMARY

One of the objective of the present disclosure is to provide an efficient AOA coupled anammox sewage treatment method based on biofilm & magnetic-separation (BFM) form, which redesigns the existing anaerobic-oxic-anoxic (AOA) sewage treatment process. The synthesis of internal carbon sources and hydrolysis of polyphosphate are achieved through the anaerobic zone. And the sludge-water separation of mixed liquid in the anaerobic zone is achieved through the carbon migration zone, the supernatant enters the aerobic pure film moving bed biofilm reactor (MBBR) zone, and the sludge is transferred from the carbon migration zone to the selection zone. The aerobic pure film MBBR zone serves as the main body of nitrification, undertaking 40% to 80% of the nitrification effect, and its higher treatment load not only has a land saving effect, but also eliminates the carbon source loss of activated sludge in the aerobic zone. The selection zone is used as an aerobic/anoxic zone can further highlight the land saving effect. The anoxic integrated fixed-film acticated sludge (IFAS) zone enriches and bears 20-30% of the nitrification load and 50-60% of the denitrification load through fillers, while the sludge undergoes denitrification and phosphorus removal. The minimum hydraulic retention time (HRT) of the sewage treatment method of the present disclosure can be guaranteed to be below 10 hours.

In order to achieve the above objective, the present disclosure adopts the following technical solutions:
An efficient AOA coupled anammox sewage treatment method based on BFM form, which includes the following steps in sequence:
a. Introducing the sewage to be treated into the anaerobic zone, wherein the synthesis of carbon sources and phosphorus release in activated sludge are mainly conducted in the anaerobic zone, and the HRT in the anaerobic zone is 1-2 hours.
b. The effluent from the anaerobic zone enters the carbon migration zone connected to the anaerobic zone, conducting enhanced solid-liquid separation of sludge water mixture from the anaerobic zone in the carbon migration zone, and the separated supernatant enters the aerobic pure film MBBR zone connected to the carbon migration zone. The separated sludge is discharged from the outlet end at the bottom of the carbon migration zone, and is transported to the selection zone connected to the aerobic pure film MBBR zone through a pipeline connected to a sludge bypass pump.
   The HRT of the carbon migration zone is 0.4-0.6h, the surface hydraulic load is ≥ 5m³/m²/h, the solid flux is ≥ 20kg/m²/h, the effluent SS is ≤ 50mg/L, and the chemical oxygen demand (COD) transfer rate is ≥ 70%.
c. The aerobic pure film MBBR zone removes ammonia nitrogen pollutants by adding suspended carriers to enrich microorganisms, and the effluent from the aerobic pure film MBBR zone enters the selection zone.

The aerobic pure film MBBR zone is designed according to 15-20% of the designed nitrification HRT, with a volumetric load of ≥ 0.2kgN/m³/d, by setting of interception screens with more than 2 levels, the final level of effluent SS is ≤ 200mg/L.

The selection zone can be used as an aerobic/anoxic zone based on the specific operating mode setting according to effluent ammonia nitrogen, and the selection zone is designed according to 20% -30% of the designed nitrification HRT.

d. The selection zone serves as an anoxic zone, utilizing the internal carbon source carried and moved by sludge bypass for endogenous denitrification and phosphorus removal. The effluent from the selection zone enters the anoxic IFAS zone connected to the selection zone.

The anoxic IFAS zone undergoes endogenous denitrification and phosphorus removal, as well as anammox denitrification. Activated sludge is used for denitrification of nitrogen and phosphorus removal, and suspended carriers are used to enrich anammox bacteria for anammox autotrophic nitrogen removal. The anoxic IFAS zone is designed according to 50-60% of the designed nitrification HRT.

The effective specific surface area of the suspended carriers in the aerobic pure film MBBR zone and the anoxic IFAS zone is ≥ 620m²/m³, the porosity is > 90%, and the filling rate is < 67%. The density of the suspended carriers in the aerobic pure film MBBR zone is 0.94-0.97g/cm³, and the specific gravity of the suspended carriers in the anoxic IFAS zone is 0.97-1.03g/cm³.

e. The effluent from the anoxic IFAS zone enters the secondary sedimentation zone connected to the anoxic IFAS zone. Obtaining supernatant and sludge after sedimentation, the supernatant is discharged, and some of the sludge is returned to the bottom of the anaerobic zone, the sludge reflux ratio is controlled to be 50% to 100%, and the remaining sludge is discharged.

If the ammonia nitrogen in the system effluent exceeds 70% of the designed ammonia nitrogen in the effluent, follow step f for operation.

f. Closing an aeration pipeline in the selection zone, turning on a mixing device, and adjusting the DO of the aerobic pure film MBBR zone to 6-8mg/L.

If the ammonia nitrogen in the system effluent drops below 50% of the designed ammonia nitrogen in the effluent, continue operating according to step c.

If the ammonia nitrogen in the system effluent continues to exceed 70% of the designed ammonia nitrogen in the effluent, then follow step g to operate.

g. Opening the aeration pipeline in the selection zone, closing the mixing device, and controlling the DO to 2-4mg/L.

If the ammonia nitrogen in the system effluent drops below 50% of the designed ammonia nitrogen in the effluent, then follow step f for operation.

When the selection zone operates in anoxic mode, the ammonia oxidation rate of the aerobic pure film MBBR zone must reach 70-80%. When the selection zone operates in aerobic mode, the ammonia oxidation rate of the aerobic pure film MBBR zone must reach 40-60%.

The advantageous technical effects directly brought by the above technical solutions are as below:
Firstly, the above process is based on the BFM process, using pure film MBBR coupled magnetic loading precipitation technology.
Secondly, ultra-fast sludge-water separation can be achieved through the carbon migration zone. The main body of the nitrification zone adopts the pure film MBBR process, which increases the treatment load by 100% compared to the traditional activated sludge method and greatly saves land. In terms of design, the selection zone serves as both nitrification and denitrification zone, which can further reduce the occupied area of the anoxic zone by 30% to 40%. Moreover, controlling the sludge retention time (SRT) can ensure that the anoxic zone achieves stable effluent TN standards on the basis of a small tank volume.

Finally, the aerobic pure film MBBR zone mainly utilizes the mass and oxygen transfer characteristics of biofilm influenced by biofilm thickness. When the impact arrives, by increasing dissolved oxygen and increasing the depth of mass and oxygen transfer, the nitrification load is further significantly increased.

As a preferred solution of the present disclosure, in steps e, f, and g, the 5-day average is used as the judgment period for each judgment, and each adjustment is made at least at an interval of 3 days.

As another preferred solution of the present disclosure, in step g, when the aeration pipeline in the selection zone is opened and the mixing device is closed, the SRT of the control system is controlled to be 40-50 days, and the remaining time is controlled to be 30-40 days.

Further, both the aerobic MBBR zone and the anoxic IFAS zone are equipped with interception screens at the outlet ends.

Preferably, the aeration pipelines are installed at the bottoms of the aerobic pure film MBBR zone and the selection zone, and submersible mixers are installed in the anaerobic area, the selection zone, and the anoxic IFAS zone.

Preferably, in step b, the sludge-water separation of mixture in the anaerobic zone is enhanced by adding magnetic particles to the carbon migration zone.

Another objective of the present disclosure is to provide an efficient AOA coupled anammox sewage treatment system based on BFM form, which includes a reaction tank, wherein the reaction tank is sequentially divided into an anaerobic zone, a carbon migration zone, an aerobic pure film MBBR zone, a selection zone, an anoxic IFAS zone, and a secondary sedimentation zone.

The outlet end of the bottom of the carbon migration zone is connected to a sludge bypass pipeline, and the other end of the sludge bypass pipeline is connected to the selection zone. The sludge obtained from the sedimentation of the carbon migration zone is transported to the bottom of the selection zone through the sludge bypass pipeline.

The outlet end of the secondary sedimentation zone is equipped with a sludge reflux pipe, and the other end of the sludge reflux pipe is connected to the anaerobic zone. Through the sludge reflux pipe, a portion of the return sludge obtained from the secondary sedimentation zone is returned to the anaerobic zone.

The anaerobic zone is configured for the synthesis of carbon sources and the release of phosphorus in activated sludge, and the HRT of the anaerobic zone is 1-2 hours.

The HRT of the carbon migration zone is 0.4-0.6h, the surface hydraulic load is ≥ 5m³/m²/h, the solid flux is ≥ 20kg/m²/h, the effluent SS is ≤ 50mg/L, and the COD transfer rate is ≥ 70%.

The aerobic pure film MBBR zone is designed according to 15-20% of the designed nitrification HRT, with a volumetric load of ≥ 0.2kgN/m³/d, by setting of interception screens with more than 2 levels, the final level of effluent SS is ≤ 200mg/L.

The selection zone can be used as an aerobic/anoxic zone based on the specific operating mode setting according to effluent ammonia nitrogen, and the selection zone is designed according to 20% -30% of the designed nitrification HRT.

The anoxic IFAS zone is designed according to 50-60% of the designed nitrification HRT.

The effects of the present disclosure are as shown as below:
1) The nitrification effect is excellent. In response to the problem of low nitrification efficiency in the activated sludge system, the nitrification main body adopts the aerobic pure film MBBR process, which utilizes the efficient enrichment effect of suspended carrier biofilm on nitrifying bacteria to improve the nitrification efficiency and impact resistance of the system. The nitrification effect can be improved by 100% compared to the ordinary activated sludge method, while the setting of the anoxic IFAS zone can further reduce the ammonia nitrogen in the effluent through anammox denitrification. On the one hand, the ammonia nitrogen removal rate of the system can be > 95%, and through optimization and adjustment, the ammonia nitrogen in the effluent can be < 0.5mg/L. On the other hand, the tank volume of the aerobic pure film MBBR zone can be saved more than double as much as that of the traditional activated sludge method.
2) The nitrogen removal effect is stable. The sludge-water separation is achieved through the carbon migration zone arranged behind the anaerobic zone, ensuring that the activated sludge does not pass through the aerobic zone, fundamentally avoiding the loss of carbon source in the aerobic pure film MBBR zone, and ensuring the removal effect of nitrogen and phosphorus in the anoxic IFAS zone. By adding suspended carriers to enrich anammox bacteria in the anoxic IFAS zone, efficient denitrification can be achieved without relying on the carbon source of the raw water, further reducing the limitation of AOA process denitrification by the carbon source of the raw water. At the lowest, stable effluent TN can be achieved on the basis of influent C/N <, 2.
3) Strong impact resistance. Under normal conditions, most of the nitrification in the system relies on biofilm. When facing impact, increasing DO can increase the treatment load. When the influent impact is too strong, the aerobic tank volume can be further enlarged by adjusting the selection zone to ensure stable effluent reaching the standard.
4) Land occupation saving. The main body of the aerobic zone adopts the aerobic pure film MBBR process, which has a higher load. The designed HRT is only half of the nitrification HRT required by the conventional activated sludge method. The selection zone is designed as both aerobic and anoxic zones, thereby further saving land. The anoxic zone adopts the IFAS process, which uses traditional activated sludge for internal carbon source denitrification for phosphorus removal and anammox for nitrogen removal, resulting in higher treatment load, and achieving land savings again. Overall, the system HRT can be reduced by more than 40% compared to traditional activated sludge method, and the minimum HRT can be guaranteed to be below 10 hours.

### BRIEF DESCRIPTION OF DRAWINGS

The following is a further illustration of the present disclosure in conjunction with the accompanying drawings:
FIG. 1 is a flowchart of the processing process of the present disclosure;
FIG. 2 and FIG. 3 are the diagrams showing the effluent qualities under the magnetic separation sedimentation process in Embodiment 2; and
FIG. 4 and FIG. 5 are the diagrams showing the effluent qualities of the aerobic pure film MBBR zone under different DO conditions in Embodiment 4.

### DETAILED DESCRIPTION OF PREFERRED EMBODIMENTS

The present disclosure provides an efficient AOA coupled anammox sewage treatment method and system based on BFM form. In order to make the advantages and technical solutions of the present disclosure more clear and definite, the following will provide a detailed illustration of the present disclosure in conjunction with specific embodiments.

Unless otherwise explicitly stated, in the entire specification and claims, the term "includes" or its transformations such as "including" will be considered as including the stated elements or components, without excluding other elements or other components.

In this article, for the convenience of description, spatial relative terms such as "under", "below", "lower", "above", "on", "upper", etc. can be used to describe the relationship between a component or feature and another component or feature in the accompanying drawings. It should be comprehend that the spatial relative terms is intended to encompass different directions of objects in use or operation, except for the directions depicted in the diagram. For example, if the object in the figure is flipped, the component described as "below" or "under" other component or feature will be oriented "above" the component or feature. Therefore, the exemplary term "below" can include both the lower and upper directions. The component can also have other orientations (rotation of 90 degrees or other orientations) and the spatial relative terms used in this article should be explained accordingly.

Firstly, a detailed explanation of some technical terms involved in the present disclosure is provided.

Design nitrification HRT: The nitrification retention time designed according to the design regulations of the activated sludge method in the *"Standard for design of outdoor wastewater engineering",* unit h;
Design denitrification HRT: The denitrification retention time designed according to the design regulations of the activated sludge method in the *"Standard for design of outdoor wastewater engineering",* unit h;
Surface hydraulic load: The amount of influent water per unit area per hour that the horizontal cross-section of the carbon migration zone can withstand, unit m³/m²/h;
Solid flux: The amount of influent SS per unit area per hour that the horizontal cross-section of the carbon migration zone can withstand, kg/m²/h;
The "sludge bypass pump" in the present disclosure specifically refers to a sludge pump, which is connected to a pipeline between the carbon migration zone and the selection zone. Its function is to introduce the sludge at the bottom of the carbon migration zone into the the selection zone.

Next, the main innovative points of the present disclosure are explained as follows:
The AOA process adopts an anaerobic → oxic → anoxic process. The anaerobic zone uses activated sludge to absorb the organic matter contained in the influent, synthesize PHA (internal carbon source), and store the synthesized PHA in the cells, and phosphorus release occurs at the same time. The aerobic zone mainly completes the nitrification of ammonia nitrogen, while the anoxic zone utilizes the internal carbon source synthesized by activated sludge in the anaerobic section for denitrification nitrogen removal and denitrification phosphorus removal, achieving dual purposes of nitrogen and phosphorus removal and improving the utilization rate of raw water carbon source. So, the core of the AOA process is the setting of the aerobic zone. Either the tank volume must be small to reduce the loss of internal carbon sources, but a smaller aerobic tank volume will affect its nitrification effect; or changing process form, so that the activated sludge does not pass through the aerobic zone, thus avoiding carbon loss fundamentally. In addition, since the actual influent quality changes periodically, if designed according to the maximum load, the land occupation is too high with long construction cycle and high investment cost, which cannot achieve a balance between excellent results and operational economy.

Therefore, the technical challenge to be overcome by the present disclosure lies in how to ensure that the optimal proportion of aerobic zone tank volume is achieved while reducing its carbon source loss, ensuring the optimal treatment effect while saving land.

Therefore, the present disclosure has redesigned the reaction tank, mainly considering the following three aspects:
Firstly, in response to the problem of carbon loss in the aerobic zone of the AOA process, the process form is based on the BFM process, using pure film MBBR coupled with magnetic loading precipitation technology to achieve absolute separation of the biological phase in the aerobic/anoxic zone. The aerobic zone operates in the form of pure film MBBR, while the anoxic zone operates in the form of activated sludge.
Secondly, for the implementation of pure film MBBR in the aerobic zone, on the one hand, the impact of influent SS on biofilm mass transfer should be considered, and on the other hand, the impact of biofilm detachment (humic sludge) on the system treatment load should also be considered. Based on a large number of experimental rules, the boundary conditions of influent SS were further determined based on the determination of SS impact boundary conditions in the pure film MBBR process and the COD removal capacity in the aerobic zone. In addition, in response to the characteristics of low moisture content and easy gas production in anaerobic sludge, a magnetic coagulation precipitation process is adopted, which achieves efficient and stable sludge-water separation by combining high solid flux with sludge concentration of the bypass sludge and the sludge in the system, and setting appropriate hydraulic loads.
Thirdly, in response to the problem of large land occupation in the existing process, the present disclosure considers three aspects. Firstly, the design does not follow the traditional activated sludge method, and the main body of the nitrification zone adopts the pure film MBBR process, which increases the treatment load by 100% compared to the traditional activated sludge method and can save a portion of the aerobic zone land occupation. Secondly, on the basis of using pure film MBBR zone with a filling rate higher than 30%, the characteristics of biofilm mass and oxygen transfer influenced by biofilm thickness can be utilized, when the impact arrives, by increasing dissolved oxygen and increasing the depth of mass and oxygen transfer, the nitration load can be further significantly increased while the tank volume remains unchanged. Finally, the selection zone serves as both nitrification and denitrification in design, which can further reduce the system land occupation by 30-40%. Moreover, controlling the SRT can ensure that the anoxic zone achieves stable effluent TN standards on the basis of small tank volume.

The above three points are closely connected and inseparable. Firstly, it is necessary for the magnetic separation sedimentation zone to achieve good sludge-water separation effect. Please refer to the following embodiments for specific effect parameters. Only good sludge-water separation effect can ensure the operation status of pure film MBBR in the aerobic zone. The operation status of pure film MBBR fundamentally eliminates the problem of carbon loss of activated sludge in the aerobic zone and ensures the TN removal effect. Besides, the selection of tank settings and control of different DO levels provides the possibility of further reducing the process land occupation.

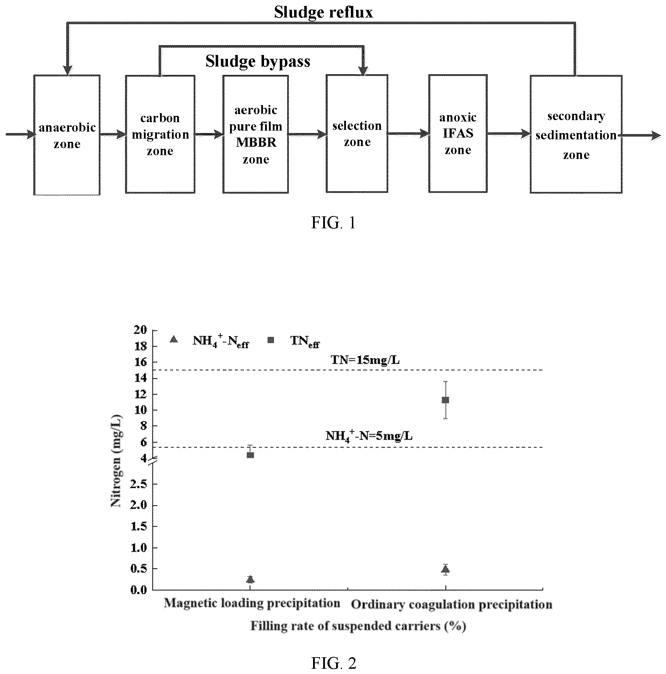

As shown in Figure 1, the system of the present disclosure includes a reaction tank, which is the main improvement point of the present disclosure, and the reaction tank is redivided into an anaerobic zone, a carbon migration zone, an aerobic pure film MBBR zone, a selection zone, an anoxic IFAS zone, and a secondary sedimentation zone in sequence. Wherein the main inlet pipeline is connected to the anaerobic zone, and the water to be treated first enters the anaerobic zone through the main inlet pipeline. In the anaerobic zone, the organic matter in the influent is adsorbed by activated sludge, generating PHA and storing in the body of microorganisms contained in activated sludge, while anaerobic phosphorus release occurs.

Maintain connectivity between the anaerobic zone and the carbon migration zone. For example, connectivity may be maintained through a drainage hole located above the effluent end of the anaerobic zone. The treated water from the anaerobic zone enters the carbon migration zone through the drainage hole. In the carbon migration zone, sludge deposits below and clear water above. A sludge bypass pump is installed on the sludge bypass pipeline connected to the outlet end at the bottom of the carbon migration zone, and the other end of the sludge bypass pipeline is connected to the selection zone to transport the sludge to the bottom of the selection zone.

The carbon migration zone mainly adopts magnetic loading precipitation process, which has the best sludge-water separation effect compared to ordinary precipitation process. For example, separating sludge and water by adding magnetic particles to the carbon migration zone, in order to ensure that the system HRT is below 10 hours, the following requirements need to be met for the carbon migration zone:
The surface hydraulic load of the carbon migration zone is ≥ 5m³/m²/h, the solid flux is≥ 20kg/m²/h, Strengthening the treatment effect by adding magnetic particles, the effluent SS is <, 50mg/L.

Moreover, the HRT in the anaerobic zone is 1-2 hours, and the HRT in the carbon migration zone is 0.4-0.6 hours. The aerobic pure film MBBR zone enriches microorganisms by adding suspended carriers to achieve the removal of pollutants such as ammonia nitrogen. The aerobic pure film MBBR zone is designed according to 15-20% of the designed nitrification HRT, with a volumetric load of ≥ 0.2kgN/m³/d, by setting of interception screens with more than 2 levels, the final level of effluent SS is ≤ 200mg/L.

The supernatant from the carbon migration zone enters the aerobic pure film MBBR zone, and the sludge flows from the sludge bypass pipeline set at the bottom of the carbon migration zone to the selection zone, transferring COD in the form of activated sludge to the selection zone. The HRT of the carbon moving zone is 0.4-0.6h, with a designed surface hydraulic load of ≥ 5m³/m²/h and a solid flux of ≥ 20kg/m²/h. By adding magnetic particles to enhance the treatment effect, the effluent SS is ≤ 50mg/L, and the COD transfer rate reaches is ≥ 70%.

The selection zone can be used as an aerobic/anoxic zone based on the specific operating mode setting according to effluent ammonia nitrogen, and the selection zone is designed according to 20% -30% of the designed nitrification HRT.

The anoxic IFAS zone undergoes endogenous denitrification for nitrogen and phosphorus removal, as well as anammox denitrification. The internal carbon sources carried and transformed by sludge bypass conduct endogenous denitrification and phosphorus removal, and the suspended carriers enrich anammox bacteria for anammox autotrophic nitrogen removal. The anoxic IFAS zone is designed according to 50-60% of the designed nitrification HRT.
suspended carriers are added to the aerobic pure film MBBR zone, wherein the filling rate of suspended carriers is greater or equal to 30% and less than 67%. It is preferred that the specific gravity of the suspended carriers is 0.94-0.97, and the porosity is>90%. The specific gravity of suspended carriers in the anoxic IFAS zone is 0.97-1.03g/cm³.

Both the aerobic pure film MBBR zone and the anoxic IFAS zone are equipped with interception screens at the outlet ends.

The aeration pipelines are installed at the bottoms of the aerobic pure film MBBR zone and the selection zone, and submersible mixers are installed in the anaerobic area, the selection zone, and the anoxic IFAS zone. The specific structures of the aeration pipelines and the submersible mixers can be achieved by referring to existing technologies.

To prevent the suspended carriers from running away, the aperture of the through-hole on the interception screens mentioned above is smaller than the diameter of the suspended carriers. To ensure that the effluent from the aerobic pure film MBBR zone meets the requirements, the interception screens can be set to two levels to ensure that the final stage effluent SS is <, 200mg/L.

The following provides a detailed explanation of the processing technology of the present disclosure in conjunction with the above system.

The specific steps include:
Step 1: The sewage to be treated first enters the anaerobic zone, and the organic matter in the influent is adsorbed by activated sludge, generating PHA and stored in the body, while anaerobic phosphorus release occurs.
Step 2: The effluent from the anaerobic zone enters the carbon migration zone, the sludge deposits at the bottom of the carbon migration zone, and the supernatant enters the aerobic pure film MBBR zone; turning on the sludge bypass pump located on the sludge bypass pipeline, and the flow rate is controlled to 10% -20% of the inlet flow; the sludge at the bottom of the carbon migration zone enters the bottom of the inlet end of the selection zone through the sludge bypass pipeline.
Step 3: The ammonia oxidation rate in the aerobic MBBR zone is 40-60%, and the effluent enters the selection zone.
Step 4: Closing the aeration pipeline in the selection zone, turning on the mixing device, and using the selection zone as the anoxic zone. The selection zone and the anoxic IFAS zone jointly carry out denitrification of phosphorus removal and anammox of nitrogen removal.
Step 5: The effluent from the anoxic IFAS zone enters the secondary sedimentation zone, and the supernatant from the secondary sedimentation zone is used as the final effluent for discharge. The sludge bypass pump is activated to control the reflux ratio to 50% -100%. Some of the sludge from the bottom of the secondary sedimentation zone flows back to the bottom of the anaerobic zone, while the remaining sludge is discharged as surplus sludge.

If the ammonia nitrogen in the system effluent exceeds 70% of the designed ammonia nitrogen in the effluent, then follow Step 6 for operation.

Step 6: Closing the aeration pipeline in the selection zone, turning on the mixing device, and adjusting the DO of the aerobic pure film MBBR zone to 6-8mg/L for operation.

If the ammonia nitrogen in the system effluent drops below 50% of the designed ammonia nitrogen in the effluent, continue operating according to Step 3.

If the ammonia nitrogen in the system effluent continues to exceed 70% of the designed ammonia nitrogen in the effluent, proceed with Step 7.

Step 7: Opening the aeration pipeline in the selection zone, turning off the mixing device, and controlling the DO to 2-4mg/L; If the ammonia nitrogen in the system effluent decreases to less than 50% of the designed ammonia nitrogen in the effluent, then operate according to Step 6.

In Step 5, Step 6, and Step 7 mentioned above, the 5-day average is used as the judgment period for each judgment, and each adjustment is made at least at an interval of 3 days. When the aeration pipeline in the selection zone is turned on and the mixing device is turned off, the SRT of the control system is 40-50 days, and the SRT of the control system is controlled to be 30-40 days in the remaining time.

The following will provide a detailed illustration of the present disclosure in conjunction with specific embodiments.

### Embodiment 1:

There are four sets of efficient AOA coupled anammox treatment experimental systems based on BFM form, numbered a-d, with HRTs of 1h, 0.5h, 2h, 4h, and 1.5h for the anaerobic zone, the carbon migration zone, the selection zone, the anoxic IFAS zone, and the secondary sedimentation zone of each system. The aerobic pure film MBBR zone and the anoxic IFAS zone of each system are added with suspended carriers, with a filling rate of 40%, and the effective specific surface area of the suspended carriers is 800m²/m³. The HRT of the aerobic pure film MBBR zone is designed as 5%, 15%, 20%, and 25% of the designed nitrification HRT, respectively (i.e. 1h, 2h, 3h, 4h), operating with the same water quality. The operation effect of each system is verified, and the treatment effect is shown in Table 1.

**Table 1 Operating effects under different HRT in the aerobic pure film MBBR zone**

| | Ammonia nitrogen | TN | COD | TP |
|---|---|---|---|---|
| Influent | 41.26±8.52 | 49.68±10.22 | 205±19.45 | 3.41±2.01 |
| Effluent in system a | 5.22±1.20 | 12.27±3.11 | 27.24±3.52 | 0.39±0.12 |
| Effluent in system b | 2.67±0.56 | 9.21±0.89 | 28.26±1.58 | 0.25±0.09 |
| Effluent in system c | 1.26±0.14 | 7.22±1.00 | 25.56±3.55 | 0.23±0.09 |
| Effluent in system d | 1.31±0.11 | 7.08±1.08 | 25.69±3.11 | 0.24±0.13 |

The operation results show that when the aerobic pure film MBBR zone is designed according to 50% of the designed HRT, the system nitrification effect is insufficient, and the ammonia nitrogen in the effluent exceeds the standard. When the aerobic pure film MBBR zone is designed according to 15% to 20% of the designed HRT, the system effluent can meet the design standard. However, when the aerobic pure film MBBR zone is designed according to 20% of the designed HRT, there is no significant improvement in both nitrification and denitrification effects, At this point, excessively high aerobic pure film MBBR zone will cause waste of tank volume.

For the situation where other AOA processes do not limit the tank volume of aerobic zone, this embodiment explores the advantages of pure film MBBR process in terms of land saving compared to traditional activated sludge method. The study shows that the HRT of aerobic pure film MBBR zone should be designed according to 15-20% of the designed HRT, which can not only ensure nitrification effect but also effectively reduce the land occupation of aerobic pure film MBBR zone.

### Embodiment 2:

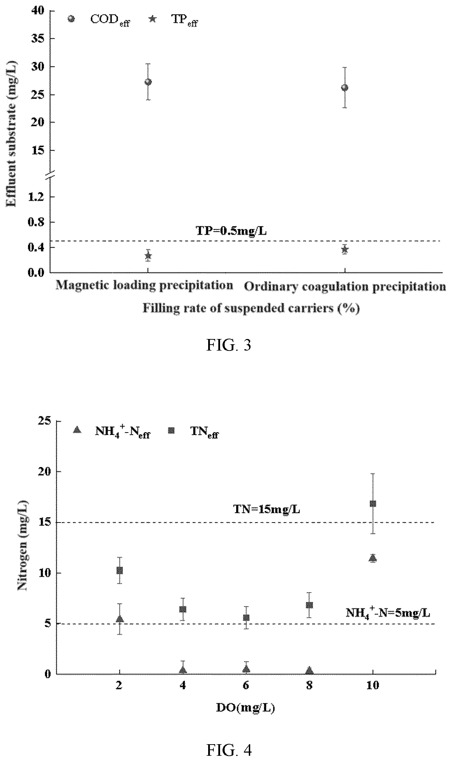

There are two sets of sewage treatment plants, numbered 1 and 2, with a designed water volume of 80m³/d. The biochemical sections of the two plants adopt efficient AOA coupled anammox sewage treatment system in the form of BFM. The HRT of the anaerobic zone, the aerobic pure film MBBR zone, the selection zone, the anoxic IFAS zone, and the secondary sedimentation zone are 1h, 2h, 2h, 2h, 4h, and 2h, respectively. The difference between the two plants lies in the carbon migration zone. The plant 1 uses magnetic separation precipitation with an HRT of 0.52 hours, while the plant 2 uses ordinary coagulation precipitation with an HRT of 1.5 hours. 50% suspended carriers are added in the aerobic zones of the two plants, controlling DO to be 4mg/L, system sludge concentration to be 3000mg/L, and the flow rate of sludge bypass pump in the two plants to be 16m³/d. The sludge reflux ratio of the two plants is 100%. The treatment effects of the two plants for the same water quality are shown in Figure 2 and Figure 3.

The operation results of the two plants show that the plant 1 adopts magnetic loading sedimentation after anaerobic zone, achieving an influent SS of only 38.26mg/L in the aerobic pure film MBBR zone. The lower SS further improves the nitrification efficiency of the aerobic pure film MBBR zone and reduces the loss of internal carbon source. However, the plant 2 uses ordinary coagulation sedimentation, which has a poor effect on dealing with the settlement of sludge containing in effluent in the anaerobic zone. The measured SS in the aerobic pure film MBBR zone is as high as 1156.87mg/L, and the higher SS intensifies the competition between the aerobic pure film MBBR zone and the sludge film, and also increases the loss of internal carbon sources. As a result, the ammonia nitrogen and TN in the effluent of the plant 2 are significantly higher than those of the plant 1. It can be seen that for the sedimentation of sludge in the anaerobic zone, magnetic separation sedimentation with higher hydraulic load should be preferred instead of ordinary sedimentation to achieve higher sludge-water separation effect. From this embodiment, it can be concluded that the magnetic loading sedimentation process is better for sludge-water separation in the anaerobic zone.

### Embodiment 3:

There are 5 sets of aerobic sewage treatment plants, numbered 1-5, with a designed HRT of 2 hours, all of which are added with suspended carriers with mature film, and the filling rate is set to 40%. The water distribution is mixed by the supernatant from the secondary sedimentation tank of the sewage plant and the initial sedimentation sludge. On the basis of ensuring that the influent ammonia nitrogen is all 40mg/L, different influent SS concentrations are set to 10, 30, 50, 70, and 90mg/L, respectively. The nitrification effect of each set is verified, and the influent quality and the effluent quality of each system is shown in Table 2.

**Table 2 Ammonia nitrogen concentrations in influent and effluent of pure film MBBR system under different SS conditions**

| | 1 | 2 | 3 | 4 | 5 |
|---|---|---|---|---|---|
| Influent | 41.22 | 40.84 | 41.26 | 42.01 | 40.24 |
| Effluent | 0.26 | 1.26 | 2.52 | 5.85 | 9.22 |
| Load rate | 100% | 96.63% | 89.70% | 80.96% | 75.73% |

Due to the low COD of the influent, the amount of SS generated due to decarbonization is not considered. When the influent SS is below 50mgAL, there is little change in the system treatment load. However, when the influent SS further increases to above 70mg/L, the rate of decrease in the system nitrification effect significantly accelerates. At this time, higher SS has a certain impact on the biofilm mass transfer. Therefore, to maintain a high load in the system, it is necessary to ensure that the influent SS is below 50mg/L.

### Embodiment 4:

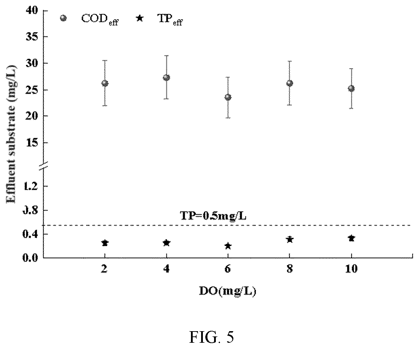

There is a sewage treatment plant, the biochemical section of which adopts an efficient AOA coupled anammox sewage treatment system in the form of BFM, with a designed daily treatment capacity of 75m³/d, and the system effluent complies with the first level A standard. The HRT of the aerobic pure film MBBR zone is 2.5 hours, and the suspended carriers are added to the aerobic pure film MBBR zone according to a filling rate of 50%. The sludge concentration in the system is 4000mg/L, and the flow of the sludge bypass pump is 10m³/d. The ammonia nitrogen concentration in the influent during different stages of operation is 21.33, 33.24, 46.25, 57.38, and 69.35mg/L, respectively. The operations of DO in the aerobic zone are 1, 2, 4, 6, and 8mg/L, respectively. The actual influent quality and effluent quality are shown in Figures 4 and 5.

When the DO of the aerobic pure film MBBR zone is 2mg/L, the nitrification effect of the system is poor, resulting in excessive ammonia nitrogen in the effluent. After gradually increasing the DO to 6mg/L, the ammonia nitrogen in the effluent of the system gradually decreases, and both are better than the design effluent standard. Due to the small change in influent C/N and no carbon loss in the aerobic pure film MBBR zone, the effluent TN of the system is mainly affected by ammonia nitrogen. When the DO of the system further increased to 8mg/L, the ammonia nitrogen in the effluent of the system exceeded the standard again, resulting in an excess of TN in the effluent. It can be seen that the treatment effect of aerobic pure film MBBR zone is greatly affected by DO. Under normal conditions, in order to save aeration, the system DO can be controlled at 4-6 mg/L. When the impact arrives, the system nitrification load can be further increased by further increasing DO to 8mg/L. Under normal conditions in the aerobic pure film MBBR zone, on the basis of sufficient influent substrate, the operation of DO gradually increases from 2mg/L to 4mg/L, 6mg/L, 8mg/L, and 10mg/L, which can increase the nitrification load by about 106.79%, 187.87%, 258.64%, and 264.11%, respectively. It can be seen that when the DO exceeds 8mg/L, the increase in nitrification load has basically stopped increasing. Therefore, in order to improve the nitrification effect, the maximum operation of DO in the aerobic pure film MBBR zone should not exceed 8mg/L.

### Embodiment 5:

There is a certain sewage treatment plant, which adopts an AOA system in the biochemical section, with a designed daily treatment capacity of 80000m³/d, and the effluent complies with the first level A standard. The designed influent quality and effluent quality of the sewage plant is shown in Table 3. The total tank volume of the biochemical tank is 55000m³, and the HRT of each functional zone is 1.00h, 0.62h, 3.20h, 1.00h, 1.60h, 6.00h, and 1.50h, respectively. Wherein, suspended carriers are added to the aerobic pure film MBBR zone according to a filling rate of 40%. The selection zone operates in an anoxic manner. On the basis of little change in the influent substrate and water temperature during the high-temperature season, the average SRT of the system activated sludge is adjusted to 20d, 30d, 40d, and 50d during operation. The influent quality and effluent quality of the system are shown in Table 4.

**Table 3 Design of influent quality and effluent quality of sewage treatment plant**

| | COD | NH₄⁺-N | TN |
|---|---|---|---|
| designed influent | 600 | 40 | 60 |
| designed effluent | 50 | 5 (8) | 15 |

**Table 4: Influent quality and effluent quality from the biochemical section of the sewage plant under different SRTs during anoxic operation in the selected zone**

| | Ammonia nitrogen | TN | COD | TP |
|---|---|---|---|---|
| Influent | 24.35 | 33.78 | 192.25 | 2.07 |
| Effluent after 20 days of SRT | 0.87 | 14.36 | 27.22 | 0.42 |
| Effluent after 30 days of SRT | 0.43 | 10.03 | 23.26 | 0.31 |
| Effluent after 40 days of SRT | 0.33 | 7.85 | 23.24 | 0.34 |
| Effluent after 50 days of SRT | 0.56 | 10.26 | 28.26 | 0.41 |

When the SRT of the system is 20 days, the sludge discharge amount is large, the sludge concentration in the system is low, and the internal carbon source storage is insufficient, resulting in a high TN in the effluent. When the SRT is 30-40 days, the ammonia nitrogen and TN in the effluent are relatively stable and significantly better than the design effluent standard. When the SRT further increases to 50 days, as the sludge discharge decreases, the system sludge concentration increases too high, leading to hydrolysis phenomenon, resulting in a worse carbon and nitrogen removal effect than when the SRT is 20-30 days. Therefore, based on the relationship between the denitrification effect of the comprehensive system and the SRT, the AOA process can easily control the optimal SRT of the system between 30-40 days when the selected zone operates in an anoxic manner.

### Embodiment 6:

In the sewage treatment plant in Embodiment 4, the selection zone operates in an aerobic manner. On the basis of little change in the influent substrate and water temperature during the low temperature season, the average ages of activated sludge in the system are adjusted to 30 days, 40 days, 50 days, and 60 days during operation. The effluent quality of the system is shown in Table 5.

When the SRT of the system is 30 days, the anoxic tank volume is insufficient, and the TN in the system effluent exceeds the standard. When the SRT is 40-50 days, the overall treatment effect of the system is good. However, as the SRT further increases to 60 days, the difference in the treatment effect of the system is not significant. However, it can be seen in engineering that the sludge floats and is difficult to settle. Therefore, based on the relationship between the denitrification effect of the comprehensive system and the SRT, the optimal SRT of the system can be easily controlled between 40 to 50 days when the AOA process is selected for aerobic operation.

**Table 5: Influent quality and effluent quality from the biochemical section of the sewage plant under different SRTs during aerobic operation in the selected zone**

| | Ammonia nitrogen | TN | COD | TP |
|---|---|---|---|---|
| Influent | 37.22. | 43.45 | 301.55 | 4.12 |
| Effluent after 30 days of SRT | 0.87 | 16.22 | 26.45 | 0.38 |
| Effluent after 40 days of SRT | 0.50 | 11.25 | 22.84 | 0.33 |
| Effluent after 50 days of SRT | 0.42 | 8.26 | 28.23 | 0.29 |
| Effluent after 60 days of SRT | 0.40 | 8.65 | 27.23 | 0.29 |

### Embodiment 7:

There are two sets of sewage treatment experimental systems, numbered 1-2, wherein the system 1 adopts an efficient AOA coupled anammox sewage treatment system in the form of BFM, and the HRT of the anaerobic zone, the carbon migration zone, the aerobic pure film MBBR zone, the selective zone, the anoxic IFAS zone, and the secondary sedimentation zone are 1h, 0.5h, 2h, 2.5h, 4h, and 1.5h respectively, with a total HRT of 10.5h. The system 2 is not provided with a selection zone, wherein the functional zones of process flow are the anaerobic zone, the carbon migration zone, the aerobic pure film MBBR zone, the anoxic IFAS zone, and the secondary sedimentation zone, and the HRT is 1h, 0.5h, 3h, 6h, 1.5h respectively, with a total HRT of 12h. The aerobic pure film MBBR zone and the anoxic IFAS zone of each device are set with a suspension carrier filling rate of 40%, and the effective specific surface area of the suspended carriers is 800m²/m³. The same water quality is used to operate and verify the operation effect of each system. The treatment effect is shown in Table 6.

**Table 6: Impact of the presence or absence of the selection zone on influent quality and effluent quality**

| | Ammonia nitrogen | TN | COD | TP |
|---|---|---|---|---|
| Influent | 42.11 | 50.26 | 152.26 | 2.96 |
| 1# | 0.22 | 8.25 | 25.62 | 0.21 |
| 2# | 0.25 | 8.55 | 27.52 | 0.19 |

When the system does not set a selection zone, an additional 20-30% of the nitrification load will be borne by the aerobic pure film MBBR zone, and an additional 20-30% of the denitrification load will be borne by the anoxic IFAS zone. The overall HRT will be extended by 14.29%, equivalent to an increase in tank volume of 14.29%. But the processing effects of the two systems are basically the same. It can be seen that the setting of the selection zone can further reduce the system tank volume and land occupation.

The parts not mentioned in the present disclosure can be achieved by adopting or drawing on existing technologies.

It should be further explained that the specific embodiments described above are only examples of the guiding principles from the present invention. Those skilled in the technology of the present invention can make various modifications or supplements to the described specific embodiments or adopt approximate methods to replace them, without departing from the spirit of the present invention or go beyond the scope defined by the claims herein.

## Claims

1. An efficient AOA coupled anammox sewage treatment method based on BFM form, which comprising the following steps in sequence:
a, introducing the sewage to be treated into the anaerobic zone, wherein the synthesis of carbon sources and phosphorus release in activated sludge are mainly conducted in the anaerobic zone, and the HRT in the anaerobic zone is 1-2 hours;
b, the effluent from the anaerobic zone enters the carbon migration zone connected to the anaerobic zone, conducting enhanced solid-liquid separation of sludge water mixture from the anaerobic zone in the carbon migration zone, and the separated supernatant enters the aerobic pure film MBBR zone connected to the carbon migration zone, the separated sludge is discharged from the outlet end at the bottom of the carbon migration zone, and is transported to the bottom of the inlet end of the selection zone connected to the aerobic pure film MBBR zone through a pipeline connected to a sludge bypass pump;
the HRT of the carbon migration zone is 0.4-0.6h, the surface hydraulic load is ≥ 5m³/m²/h, the solid flux is ≥ 20kg/m²/h, the effluent SS is <, 50mg/L, and the COD transfer rate is ≥ 70%;
c, the aerobic pure film MBBR zone removes ammonia nitrogen pollutants by adding suspended carriers to enrich microorganisms, and the effluent from the aerobic pure film MBBR zone enters the selection zone;
the aerobic pure film MBBR zone is designed according to 15-20% of the designed nitrification HRT, with a volumetric load of ≥ 0.2kgN/m³/d, by setting of interception screens with more than 2 levels, and the final level of effluent SS is ≤ 200mg/L;
the selection zone can be used as an aerobic/anoxic zone based on the specific operating mode setting according to effluent ammonia nitrogen, and the selection zone is designed according to 20% -30% of the designed nitrification HRT;
d, the selection zone serves as an anoxic zone, utilizing the internal carbon source carried and moved by sludge bypass for endogenous denitrification and phosphorus removal, the effluent from the selection zone enters the anoxic IFAS zone connected to the selection zone;
the anoxic IFAS zone undergoes endogenous denitrification and phosphorus removal, as well as anammox denitrification, and activated sludge is used for denitrification of nitrogen and phosphorus removal and short-cut denitrification to produce nitrite, and suspended carriers are used to enrich anammox bacteria for anammox autotrophic nitrogen removal, so as to achieve the standard removal of ammonia nitrogen and total nitrogen, the anoxic IFAS zone is designed according to 50-60% of the designed nitrification HRT;
the effective specific surface area of the suspended carriers in the aerobic pure film MBBR zone and the anoxic IFAS zone is ≥ 620m²/m³, the porosity is > 90%, and the filling rate is < 67%, the density of the suspended carriers in the aerobic pure film MBBR zone is 0.94-0.97g/cm³, and the specific gravity of the suspended carriers in the anoxic IFAS zone is 0.97-1.03g/cm³;
e, the effluent from the anoxic IFAS zone enters the secondary sedimentation zone connected to the anoxic IFAS zone, obtaining supernatant and sludge after sedimentation, the supernatant is discharged, and some of the sludge is returned to the bottom of the anaerobic zone, the sludge reflux ratio is controlled to be 50% to 100%, and the remaining sludge is discharged;
if the ammonia nitrogen in the system effluent exceeds 70% of the designed ammonia nitrogen in the effluent, follow step f for operation;
f, Closing the aeration pipeline in the selection zone, turning on a mixing device, and adjusting the DO of the aerobic pure film MBBR zone to 6-8mg/L;
if the ammonia nitrogen in the system effluent drops below 50% of the designed ammonia nitrogen in the effluent, continue operating according to step c;
if the ammonia nitrogen in the system effluent continues to exceed 70% of the designed ammonia nitrogen in the effluent, then follow step g to operate;
g, Opening the aeration pipeline in the selection zone, closing the mixing device, and controlling the DO to 2-4mg/L;
if the ammonia nitrogen in the system effluent drops below 50% of the designed ammonia nitrogen in the effluent, then follow step f for operation.

2. The efficient AOA coupled anammox sewage treatment method based on BFM form according to claim 1, wherein in steps e, f, and g, the 5-day average is used as the judgment period for each judgment, and each adjustment is made at least at an interval of 3 days.

3. The efficient AOA coupled anammox sewage treatment method based on BFM form according to claim 1, wherein in step g, when the aeration pipeline in the selection zone is opened and the mixing device is closed, the SRT of the control system is controlled to be 40-50 days, and the remaining time is controlled to be 30-40 days.

4. The efficient AOA coupled anammox sewage treatment method based on BFM form according to claim 1, **characterized in that** both the aerobic MBBR zone and the anoxic IFAS zone are equipped with interception screens at the outlet ends.

5. The efficient AOA coupled anammox sewage treatment method based on BFM form according to claim 1, **characterized in that** the aeration pipelines are installed at the bottoms of the aerobic pure film MBBR zone and the selection zone, and submersible mixers are installed in the anaerobic area, the selection zone, and the anoxic IFAS zone.

6. The efficient AOA coupled anammox sewage treatment method based on BFM form according to claim 1, **characterized in that** in step b, the sludge-water separation of mixture in the anaerobic zone is enhanced by adding magnetic particles to the carbon migration zone.

7. An efficient AOA coupled anammox sewage treatment system based on BFM form, which comprising a reaction tank, **characterized in that** the reaction tank is sequentially divided into an anaerobic zone, a carbon migration zone, an aerobic pure film MBBR zone, a selection zone, an anoxic IFAS zone, and a secondary sedimentation zone;
the outlet end of the bottom of the carbon migration zone is connected to a sludge bypass pipeline, and the other end of the sludge bypass pipeline is connected to the selection zone, the sludge obtained from the sedimentation of the carbon migration zone is transported to the bottom of the inlet end of the selection zone through the sludge bypass pipeline;
the outlet end of the secondary sedimentation zone is equipped with a sludge reflux pipe, and the other end of the sludge reflux pipe is connected to the anaerobic zone, through the sludge reflux pipe, a portion of the return sludge obtained from the secondary sedimentation zone returns to the anaerobic zone;
the anaerobic zone is configured for the synthesis of carbon sources and the release of phosphorus in activated sludge, and the HRT of the anaerobic zone is 1-2 hours;
the HRT of the carbon migration zone is 0.4-0.6h, the surface hydraulic load is ≥ 5m³/m²/h, the solid flux is ≥ 20kg/m²/h, the effluent SS is <, 50mg/L, and the COD transfer rate is≥ 70%;
the aerobic pure film MBBR zone is designed according to 15-20% of the designed nitrification HRT, with a volumetric load of ≥ 0.2kgN/m³/d, by setting of interception screens with more than 2 levels, the final level of effluent SS is <, 200mg/L;
the selection zone can be used as an aerobic/anoxic zone based on the specific operating mode setting according to effluent ammonia nitrogen, and the selection zone is designed according to 20% -30% of the designed nitrification HRT;
the anoxic IFAS zone is designed according to 50-60% of the designed nitrification HRT.
